(19) Europäisches Patentamt
European Patent Office
Office européen des brevets

(11) EP 1 998 464 A1

(12) EUROPEAN PATENT APPLICATION

(43) Date of publication:
03.12.2008 Bulletin 2008/49

(51) Int Cl.:
*H04B 3/32* (2006.01)      *H04L 27/26* (2006.01)

(21) Application number: 07010646.3

(22) Date of filing: 29.05.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventor: **Zirwas, Wolfgang**
**81249 München (DE)**

(74) Representative: **Bruglachner, Thomas E.**
**Nokia Siemens Network GmbH & Co. KG**
**Patentabteilung**
**Postfach 80 17 60**
**81541 München (DE)**

(54) **Method and device for data processing and communication system comprising such device**

(57)     A method and a device are provided for data processing, in particular for processing a channel to reduce interference and/or crosstalk, said method comprising the following steps of (i) Clustering said data in order to reduce a processing complexity; and (ii) Processing at least a portion of the clustered data in order to reduce interference and/or crosstalk of the channel.

FIG 4

EP 1 998 464 A1

**Description**

The invention relates to a method and to a device for data processing, in particular to reduce interference and/or crosstalk, and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52Mbit/s in downstream - 12Mbit/s in upstream with asymmetric access.

Currently, standard VDSL uses up to 4 different frequency bands, two for upstream (from the client to the telecom provider) and two for downstream. The underlying modulation technique is DMT (discrete multitone modulation), wherein each tone carries a specified number of bits that are incorporated into a complex QAM (quadrature amplitude modulation) symbol.

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

VDSL2 is designed to support the wide deployment of Triple Play services such as voice, video, data, high definition television (HDTV) and interactive gaming. VDSL2 enables operators and carriers to gradually, flexibly, and cost efficiently upgrade existing xDSL infrastructure.

ITU-T G.993.2 (VDSL2) is an enhancement to G.993.1 (VDSL) that permits the transmission of asymmetric and symmetric (full duplex) aggregate data rates up to 200Mbit/s on twisted pairs using a bandwidth up to 30MHz.

The xDSL wide band modulation approaches are problematic relating to crosstalk interference that is introduced to the twisted pair transmission line and received by the modem.

Crosstalk occurs when wires are coupled, in particular between wire pairs of the same or a nearby bundle that are used for separate signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone lines in the same and/or a nearby multi-core cable or bundle. With an increasing transmission speed, this problem even deteriorates, which may significantly limit a maximum data rate to be transmitted via a single line.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

Processing of a pre-coding matrix at the central office (CO) results in processing a 50*50 matrix thereby consuming a significant region on a chip and leading to a high power consumption.

A straight-forward approach requires all lines of a cable to be attached to a single processing unit in the CO for pre-coding. Hence, a full matrix inversion over the complete dimension of the matrix is required.

The **problem** to be solved is to overcome the disadvantage as stated before and to provide an approach for processing data in particular in an xDSL field such that crosstalk interference is reduced and/or minimized.

This problem is solved according to the features of the independent claims. Further embodiments result from the depending claims.

In order to overcome this problem, a method is provided for data processing, in particular for processing a channel to reduce interference and/or crosstalk, said method comprising the following steps:

- Clustering said data in order to reduce a processing complexity; and
- Processing at least a portion of the clustered data in order to reduce interference and/or crosstalk of the channel.

Advantageously, channel matrix properties can be attended to so that crosstalk channel estimation is desensitized and an overall processing effort is reduced.

However, far-end crosstalk (FEXT) between the lines is often small resulting in a sparsely occupied crosstalk matrix. Typically, the crosstalk matrix has substantially a block diagonal structure, which stems from the fact that the cable is separated into sub-bundles comprising a higher crosstalk, while crosstalk in-between sub-bundles is reduced by a (special) drilling of each sub-bundle.

Pre-coding techniques like "zero-forcing" or minimum means squared error (MMSE) are discussed to overcome the crosstalk, which is in particular investigated as a DSL layer 3 technology.

In an embodiment, said data comprise coefficients of a pre-coding matrix.

It is to be noted that this approach relates to both pre-coding as well as equalization. Hence, the term pre-coding in this document relates to both alternatives, i.e. pre-coding and equalization.

Hence, said data may comprise information to describe a channel, in particular a channel comprising several lines that may connect a central office with several customer-premises equipments (e.g., (at least) one line per customer-premises equipment).

In another embodiment, the clustering of the matrix comprises the steps:

- Identifying crosstalk that is above a predetermined threshold;
- Processing the matrix to arrange said crosstalk identified in a region along its diagonal;
- Clustering the matrix along said region.

In a further embodiment, the clustered matrix can be pre-coded.

This allows to concentrate relevant information around the diagonal of the matrix (in a region around or along the matrix' diagonal) and to cluster and process sub-matrices (i.e. clusters along said region). Such processing, e.g. pre-coding, of a clustered matrix (sub-matrix) - for all such clustered matrices - still requires less computing effort than processing the full matrix. Hence, the processing power can be reduced and/or the processing of the clustered matrix can be achieved faster.

In a next embodiment, the clustering of data comprises a coordination. The coordination may further be based on at least one of the following criteria:

- at least one measurement in particular together with static and/or semi-static adaptation of a signal power for a transmission signal;
- a sub-bundle structure of a cable, in particular of a multi-core cable;
- a length of lines in particular connecting a central office with customer-premises equipments.

It is also an embodiment that said clustering of the data comprises a provider and/or operator connecting lines to a central office (CO) and/or to a digital subscriber line access multiplexer (DSLAM) such that a crosstalk and/or interference is reduced or minimized.

Hence, connecting of the lines can be done according to a predetermined scheme that reduces the crosstalk and/or interference effects.

Pursuant to another embodiment, the central office (CO) and/or the digital subscriber line access multiplexer (DSLAM) comprises a distribution unit that allows switching and/or connecting lines between the CO and/or the DSLAM on the one side and customer-premises equipments (CPEs) on the other side.

It is to be noted that the distribution unit may be an automatic distribution unit that can be realized separately or, e.g., on a line card.

A processing scheme may use a connection to all ports of a line card or of a DSLAM, but an internal distribution means and/or clusters may be used in order to reduce a number of modem correlations.

An appropriate selection of such lines (e.g., double copper wires) that significantly interfere with each other can be used in order to reduce the complexity of the problem to be solved, i.e. the task to be processed is clustered and each cluster can be processed separately thereby reducing the overall processing effort.

According to an embodiment, the data represent a channel that is described as a multiple-input-multiple-output (MIMO) system comprising first coefficients associated with transmission lines and second coefficients in particular associated with crosstalk and/or interference.

According to another embodiment, the clustering of data comprises a clustering into groups.

In yet another embodiment, the data clustering into groups comprises the steps:

- Cross-spectra of the data are evaluated;
- Data are grouped together that show strong cross-spectra.

The data may be grouped together according to cross-spectra values. Such values may be of a predefined range for grouping purposes. Several groups may be set up, preferably each such group providing a predetermined range.

According to a further embodiment, a cross-spectra matrix is determined. Next, the cross-spectra matrix may be permuted to obtain a strong block-diagonal structure. Advantageously, the cross-spectra matrix may be inverted in a subsequent step.

It is also an embodiment that the channel matrix that results from the MIMO system is permuted according to the cross-spectra matrix.

Hence, the inversion of the blocks of the permuted clustered channel matrix can be utilized for a partial crosstalk canceller performing pre-coding in order to reduce or cancel crosstalk and/or interference. The cross-spectra matrix may be utilized to find these clusters that enable appropriate permutation of the channel matrix.

It is a further embodiment that a bitloading for a multi-user scenario is calculated on a per-cluster or on a per-group basis, using the information obtained from said clustering.

Pursuant to yet an embodiment, the methods set forth may be used for crosstalk and/or interference reduction and/or cancellation.

Also, the methods can be used in a digital subscriber line environment (DSL, xDSL).

Further, the methods may be used in a communication network, in particular in a central office (CO) or in a digital subscriber line access multiplexer (DSLAM).

The problem state supra is also solved by a device for data processing, in particular for interference and/or crosstalk reduction and/or cancellation comprising a processor unit that is arranged and/or equipped such that the method as described herein is executable on said processor.

It is an embodiment that said device is a communication device, in particular a Central Office (CO) or a Digital Subscriber Line Access Multiplexer (DSLAM).

The problem is also solve by a communication system comprising said device as describe herein.

Embodiments of the invention are shown and illustrated in the following figures:

Fig.1    shows user signals and crosstalk signals in a DSL system, wherein a central office is connected to several customer-premises equipments;

Fig.2    shows a concept for interference pre-distortion comprising a channel transfer function, a pre-distorted transmit signal and a signal for pre-distortion;

Fig.3A    shows a 9*9 channel matrix comprising diagonal elements and elements with crosstalk values higher than a predetermined threshold;

Fig.3B    shows the 9*9 channel matrix of Fig.3A further comprising off-diagonal elements that have been reduced below a predetermined threshold by a coordination function;

Fig.4    shows a processing structure for crosstalk cancellation by pre-coding with and without coordination;

Fig.5    shows a scenario comprising a communication network allowing to send data from a server to a client in particular via an xDSL connection;

Fig.6    shows a multiple-input-multiple-output (MIMO) system modeling near-end crosstalk (NEXT) and far-end crosstalk (FEXT);

Fig.7A    shows a section of a ground-bundle with ten wire pairs of copper wires;

Fig.7B    shows a section of a main bundle with fifty pairs of copper wires.

Advantageously, the approach presented herewith combines interference coordination by linear optimization with crosstalk cancellation by pre-coding.

COORDINATION

Coordination in multi-user systems has the advantage of a low processing effort and very small control signal overhead. Coordination may result on measurements together with static or semi-static adaptation of signal powers for the transmit signals or it may be based on other criteria, e.g., on a sub-bundle structure of the cable itself and/or the length of the individual lines, e.g., from a central office (CO) or digital subscriber line access multiplexer (DSLAM) to at least one customer-premises equipment (CPE).

Hence, a interference level within a sub-bundle and between sub-bundles of a multi-core cable can be utilized.

Semi-static coordination can be used to adapt more precisely to the actual channel (described by a matrix) thereby providing higher gains. However, such coordination may also require some control signaling.

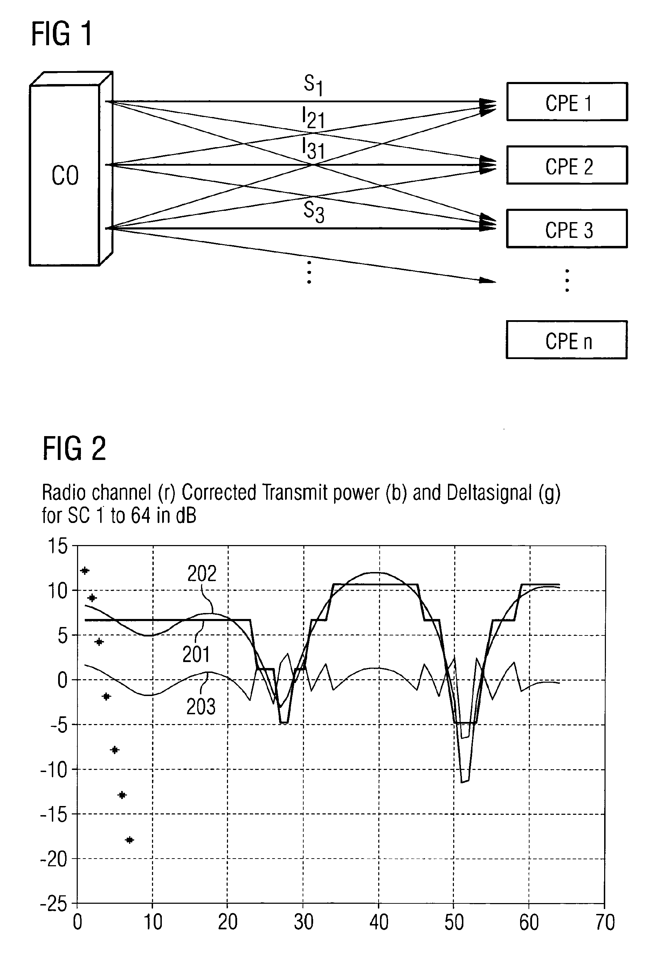

**Fig.1** shows user and crosstalk signals in a DSL system. A central office CO is connected via lines S1, S2, S3 with customer-premises equipments CPE1, CPE2, CPE3.

Interference that may comprise crosstalk and general interference is caused by any line S1 to S3 towards an adjacent line, e.g., the respective other lines of Fig.1.

The coordination utilizes the fact that crosstalk levels IFxy (i.e. interference between lines x and y) are different between different lines x any y.

Hence, varying constrained linearly solvable optimization criteria can be defined, e.g., like an overall throughput maximization or a maximization of a minimum throughput. Said criteria can be solved by linear optimization tools (e.g., available for the MATLAB software package).

Additional constraints may be defined, like a maximum transmitting power for each line and/or a sum power constraint in case of optimization over all single carriers of a multi carrier system.

Coordination gains stem from the fact that a first group of lines may transmit data at a higher transmitting power than other lines without generating significant crosstalk while a second group of lines may reduce the overall throughput due to strong crosstalk effects to at least one adjacent line so that the overall transmitting capacity of the system increases, if such lines of the second group operate at a reduced power level.

In the field of DSL systems, many sub-carriers - which have due to frequency selectivity different channel matrices - can be utilized.

Based on an orthogonal nature of multi carrier systems a linear optimization can be performed for each sub-carrier individually. This may have a significant impact on the processing effort.

Said processing effort can be reduced by suitable signal pre-distortion (pre-coding) according to Fig.2. A graph 201 shows a pre-distorted transmit signal, a graph 202 shows a channel transfer function and a graph 203 shows a signal used for pre-distortion.

In Fig.2 it is illustrated that the received power level for several adjacent sub-carriers is set to a single value by pre-equalization of power levels. As a consequence, the linear optimization can be done for several sub-carriers together. This would also be helpful for reducing the control signal overhead in case of bitloading, i.e. such bitloading can be completed for several adjacent sub-carriers with the same number of bits.

Moreover, clustering allows to further reduce the complexity of the linear optimization problem for calculating the optimal bitloading in a multi-user scenario. Because of the limited mutual influence of bitloadings of users belonging to different clusters, it may suffice optimizing the bitloading on a per-cluster basis, possibly for several adjacent subcarriers. This procedure reduces the complexity of the linear optimization problem significantly, thus improving adaptation to real-world applications.

The pre-equalization can be carried out without changing the overall transmit power, because power variations average over the sub-carriers.


CROSSTALK CANCELLATION AND COORDINATION

Typical gains may depend on the actual channel matrices for each sub-carrier. Crosstalk cancellation by pre-coding establish an improved performance at the cost of a high processing power and a particular control signaling required. It further leads to a high number of pilot signals and a lot of feedback information to be transmitted and processed in order to achieve an accurate channel measurement.

Hence, the advantages of coordination as set forth (i.e., relatively easy to implement with a limited overhead required) may be combined with cancellation (i.e., significant performance gain).

One possibility to achieve the desired result is to cancel off-block diagonal elements in a channel matrix (i.e., elements of the channel matrix that are not located at or in a region around the diagonal of such matrix) if the respective element's value is below a given threshold value.

This would maximize a minimum signal-to-noise interference ratio (SNIR) between the lines.

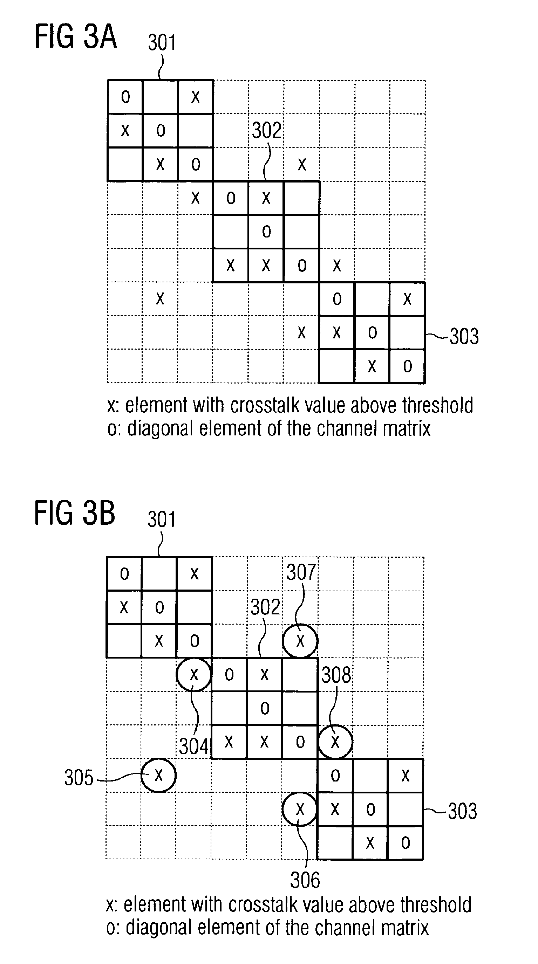

Accordingly, **Fig.3A** shows a 9*9 channel matrix comprising diagonal element "○" and elements with crosstalk values above a predetermined threshold "x". The 9*9 channel matrix is clustered into a block diagonal structure comprising squares 301, 302 and 303 indicated by three 3*3 squares with solid lines comprising the diagonal of the 9*9 channel matrix (i.e. covering a region around said diagonal of the 9*9 channel matrix).

**Fig.3B** is based on Fig.3A, but the off-diagonal elements that have been reduced below a predetermined threshold by said coordination are indicated by encircled elements 304, 305, 306, 307 and 308.

Due to such cleaned channel matrix structure, cancellation can be restricted to the squares 301, 302 and 303, thereby significantly reducing the overall processing effort.

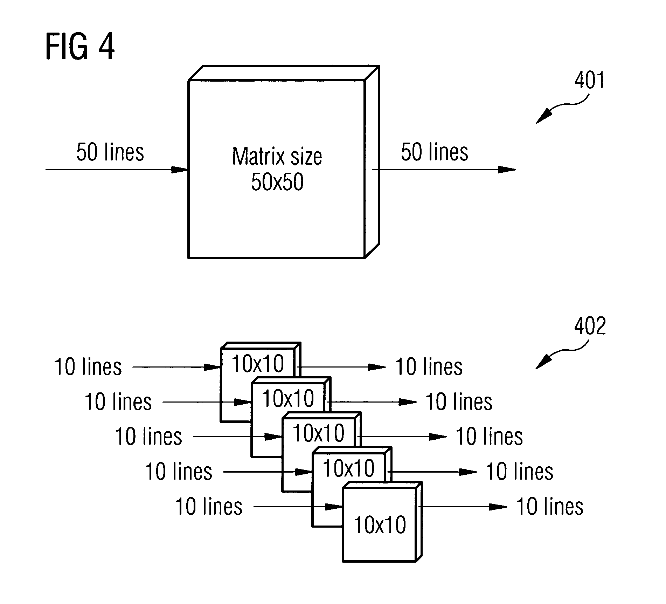

**Fig.4** shows different processing structures 401 and 402 for a pre-coding system with and without coordination.

The structure 401 shows a 50*50 matrix that may have to be estimated by the customer-premises equipment, fed back to the central office and processed by the central office.

The approach presented herein combines coordination and cancellation and hence allows segmentation of this 50*50 matrix into five matrices of a 10*10 size that can be calculated and processed independently from each other.

This leads to a significant reduction of processing.

It is a further advantage of such approach to cope with 10 incoming and 10 outgoing lines only per matrix (or channel modeled by said matrix) instead of 50 incoming and 50 outgoing lines that need to be attached to each processing unit. In actual systems, a number of available pins may be a limiting factor.

ADVANTAGES

In particular, the approach provided herewith comprises the following benefits and/or advantages:

a) Utilizing mechanisms of linear optimization for the coordination as a standalone technique increases the performance at a manageable effort.

b) Another advantage is the combined effects of the strength of coordination - small implementation effort with low control overhead - combined with the cancellation, i.e. large gains are suitably exploited. This allows realizing similar performance gains as for full cancellation (processing the overall matrix with tremendous processing efforts) at a considerably smaller processing complexity, which is in particular important for practical realization.
The reduced complexity has the advantage that a reduced number of calculations for matrix inversion and much less multiplications with the weighting coefficients are required. This is in particular crucial as such weighting has to be done for all data symbols.

c) The processing can be done in blocks that are arranged in a region along the diagonal of the channel matrix, thereby simplifying the hardware structure, because such processing can be passed to different chips, e.g. if the number of lines which can be attached to a single chip is not sufficient.

d) In case of the proposed pre-distortion for adjacent sub-carriers, the number of weighting matrices can be significantly reduced, as such weighting can be used for several sub carriers.
Furthermore, it may be possible to sequentially reuse the same weighting factor for adjacent sub-carriers, thereby, e.g., reducing the number of memory accesses required.

e) In addition, the approach provided herein can be extended such that the linear optimization leads to a complete removal of all off-diagonal elements for one or more of the squares 301 to 303 shown in Fig.3A and Fig.3B.
In such case, the processing can be reduced to the remaining lines, while a few lines only are handled by coordination. This is helpful if only a few lines for cancellation are missing at the processing chip.
Additionally, the lines that are not pre-coded may have to be selected so that throughput degradation is minimized.

f) A further approach would provide a constraint for the linear optimization so that the crosstalk levels for the (all) lines reach a similar level.
This allows utilizing weighting factors with a reduced number of bits for cancellation, which reduces the complexity of multiplications with the data symbols.

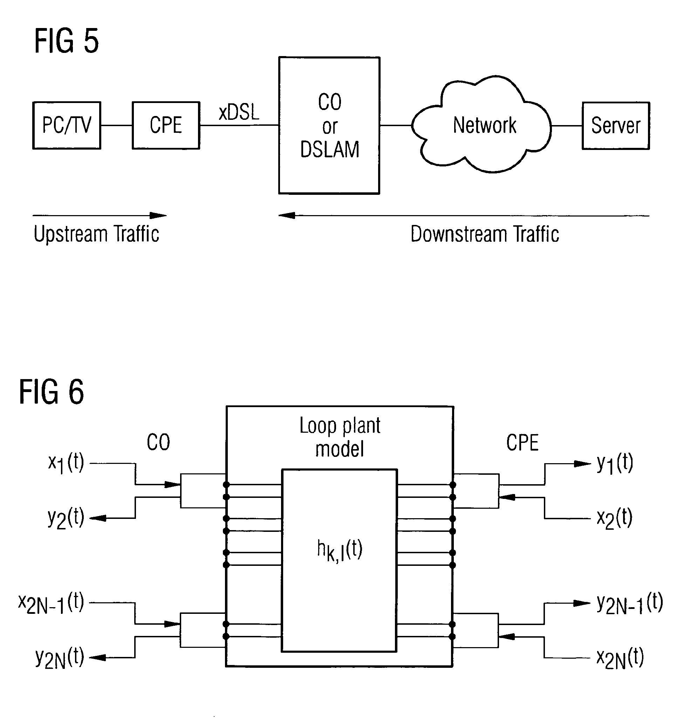

A particular scenario of a communication network is shown in Fig.5. Downstream Traffic is conveyed from the Server via a Network to a Central Office or Digital Subscriber Line Access Multiplexer CO/DSLAM. The CO/DSLAM is further connected via a digital subscriber line xDSL to a Customer-Premises Equipment CPE. The digital subscriber line connection can be in particular of the following type:

- Asymmetric Digital Subscriber Line ADSL, ADSL2, ADSL2+;
- High Data Rate Digital Subscriber Line HDSL;
- Very High Speed Digital Subscriber Line VDSL, VDSL2.

The customer can be connected to the Customer-Premises Equipment CPE via a set-top box and a television or via a personal computer PC/TV. Data that is sent from the PC/TV towards the Server is referred to as Upstream Traffic.

Preferably, an operator or provider wants to efficiently use the xDSL downstream direction from the CO/DSLAM to the CPE by employing high data rate with low crosstalk effects.

As stated herein, a problem in xDSL transmission is crosstalk, i.e. mutual interference between xDSL systems transmitting data over the same cable-bundle, i.e. via different lines of a multi-core cable.

This problem can be modeled by a MIMO (Multiple Input Multiple Output) transmission, in which each binder can be utilized as a single MIMO channel, on which many xDSL systems may operate.

Since modern xDSL systems implement Frequency Division Multiplexing (FDM) between upstream and downstream, and transmit using Discrete Multi-Tone (DMT) modulation, it is possible to decompose the model of the whole binder in a set of mutually independent sub-models. Each such sub-model describes the transmission on a DMT sub-carrier.

**Fig.6** shows a multiple-input-multiple-output (MIMO) system modeling near end crosstalk (NEXT) and far end crosstalk (FEXT). The Loop Plant Model LPM represents the complete channel structure including (but not limited to) a main distribution frame, optional branching devices and crosstalk interferences of various kind.

Advantageously, such Loop Plant Model LPM can be used to model upstream (from a customer-premises equipment CPE to a central office CO) and downstream (traffic from the CO towards the CPE) traffic via separate ports.

Further, the Loop Plant Model LPM comprises a matrix of pulse responses comprising pulse responses of the transmission lines in its diagonal and crosstalk interference outside of the matrix' diagonal:

$$y_k(t) = \sum_{l=0}^{L-1} \left( h_{k,l} * x_l \right)(t) \tag{1},$$

wherein $h_{k,k}(t)$ is associated with the respective transmission line and hence represents the pulse response of said transmission line and $h_{k,l}(t)$ ($k \neq l$) represents the crosstalk interference outside of the matrix' diagonal, i.e. crosstalk interference between a port with an index k and another port with an index 1.

It is to be noted that the symbol * expresses a convolution operation.

Considering the k-th sub-carrier, the channel is modeled by a complex matrix $\mathbf{H_k}$.

An input of the channel is a vector $\mathbf{x}_k$ formed by $x_{k,i}$ symbols, and the output of the channel is a vector $\mathbf{y_k}$, comprising $y_{k,i}$ symbols. Hence, $x_{k,i}$ is the QAM symbol transmitted on the k-th sub-carrier from the i-th xDSL system, and $y_{k,i}$ is the corresponding symbol received at the other end of the cable from the i-th receiver.

In case of upstream data transmission, the QAM symbols $x_{k,i}$ are sent by the CPEs and the symbols $y_{k,i}$ are received by the DSLAM and/or the CO. In the case of downstream data transmission, this scheme applies vice versa. A vector $\mathbf{n_k}$ contains noise samples $n_{k,i}$.

Data transmission over a single sub-carrier can be modeled by

$$\mathbf{y}_k = \mathbf{H}_k \ \mathbf{x}_k + \mathbf{n}_k \tag{2}.$$

According to this model, crosstalk may be reduced by equalization and/or by pre-equalization on a per-carrier basis.

Unfortunately, such approach of equalization and/or by pre-equalization on a per-carrier basis results in a very high computational load.

Hence, the objective set forth herewith is in particular to partially cancel crosstalk and/or interference thereby taking only a sub-set of systems and carriers into account for (pre-)equalization purposes.

The technique presented herewith allows a significant reduction of the number of matrix inversions required.

The partial crosstalk cancellation may be based on a clustering of signals.

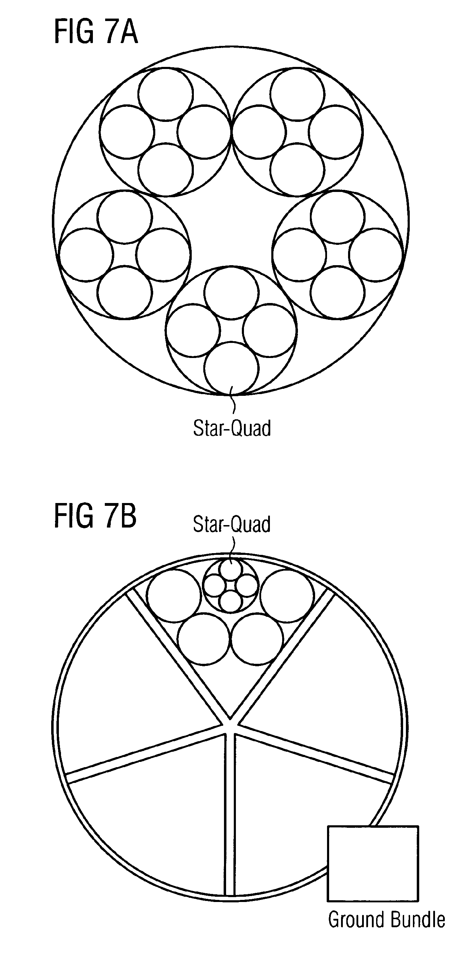

Regarding a structure of multi-core cables such as, e.g., telephone cable bundles (formed by star-quads, ground-bundles and main-bundles as shown in **Fig.7A** and **Fig.7B),** it is possible to assert that the cable is formed by near-independent groups of mutual interferers (e.g. those in the same ground-bundle).

This has an impact on cross-spectra of the signals as well as on the relating cross-spectra matrix, which can be calculated as:

$$\mathbf{S}_k = \mathbf{x}_k \ \mathbf{x}_k^H \tag{3}.$$

In particular, signals that are within the same group have strong cross-spectra (and the corresponding entries in the cross-spectra matrix will show high absolute values), while signals in different groups will have less cross-spectra (and the corresponding entries in the cross-spectra matrix will show low absolute values).

Hence, it is possible to design a partial crosstalk canceller, for each sub-carrier, based on such group(s). In particular, the fact that there exist groups of interferers with strong in-group correlation, but with considerably weak dependencies to other groups, may lead to a strong block-diagonal structure in case the cross-spectra matrix is appropriately permuted.

The reason for permuting the matrix stems from the fact that physically adjacent wire-pairs may be "logically" distant (i.e., the numbering of the signals in the logical representation does not necessarily match the physical sequence within the cable-bundle). Therefore a clustering procedure is necessary in order to identify the groups of mutually-dependent signals, and to calculate the permutation that leads to a (nearly) block-diagonal cross-spectra matrix.

Having calculated the required permutation matrix $\mathbf{P_k}$, a permuted cross-spectra matrix $\mathbf{S_k}'$ can be obtained according to

$$\mathbf{S_k}' = \mathbf{P_k} \ \mathbf{S_k}^H \ \mathbf{P_k}^H \qquad\qquad (4).$$

Based on the permuted cross-spectra matrix $\mathbf{S_k}'$ a vector $\mathbf{b}$ can be obtained comprising indices of the last signals belonging to each group.

Starting with the block-diagonal matrix $\mathbf{S_k}'$, it is possible to apply the same permutation to the signals and to the MIMO channel-matrix, thus obtaining a logical representation of signals belonging to the same "physical" group.

Therefore, inserting said permutation into equation (2) results in a new channel model, wherein the signals are ordered as in the permuted cross-spectra matrix $\mathbf{S_k}'$:

$$\mathbf{y_k}' = \mathbf{P_k} \ \mathbf{y_k} = \mathbf{P_k} \ \mathbf{H_k} \ \mathbf{x_k} + \mathbf{P_k} \ \mathbf{n_k} = \qquad\qquad (5),$$
$$= \mathbf{P_k} \ \mathbf{H_k} \ \mathbf{P_k}^H \ \mathbf{P_k} \ \mathbf{x_k} + \mathbf{P_k} \ \mathbf{n_k}$$

Subsequently, a design of the partial crosstalk canceller may be straightforward. The blocks of the main diagonal of the permuted MIMO matrix $\mathbf{P_k} \mathbf{H_k} \mathbf{P_k}^H$ have to be inverted.

A dimension of the blocks to be inverted is indicated by the elements of the vector b. The inverse matrices obtained are the partial crosstalk cancellers for the permuted signals contained in $\mathbf{y_k}'$ of equation (5).

**Claims**

1. A method for data processing, in particular for processing a channel to reduce interference and/or crosstalk, said method comprising the following steps:

   - Clustering said data in order to reduce a processing complexity; and
   - Processing at least a portion of the clustered data in order to reduce interference and/or crosstalk of the channel.

2. The method according to claim 1, wherein the data comprise coefficients of a pre-coding matrix.

3. The method according to claim 2, wherein said clustering of the matrix comprises the steps:

   - Identifying crosstalk that is above a predetermined threshold;
   - Processing the matrix to arrange said crosstalk identified in a region along its diagonal;
   - Clustering the matrix along said region.

4. The method according to claim 3, further comprising the step:

   - Pre-coding of the clustered matrix.

5. The method according to any of the preceding claims,
   wherein said clustering of the data comprises a coordination.

6. The method according to claim 5, wherein the coordination is based on at least one of the following criteria:

   - at least one measurement in particular together with static and/or semi-static adaptation of a signal power for a transmission signal;
- a sub-bundle structure of a cable, in particular of a multi-core cable;
- a length of lines in particular connecting a central office with customer-premises equipments.

7. The method according to any of the preceding claims, wherein said clustering of the data comprises a provider and/or operator connecting lines to a central office and/or to a digital subscriber line access multiplexer such that a crosstalk and/or interference is reduced or minimized.

8. The method according to claim 7, wherein the central office and/or the digital subscriber line access multiplexer comprises a distribution unit that switches lines between the central office and/or the digital subscriber line access multiplexer and customer-premises equipments.

9. The method according to any of the preceding claims, wherein said data represent a channel that is described as a MIMO system comprising first coefficients associated with transmission lines and second coefficients in particular associated with crosstalk.

10. The method according to any of the preceding claims, wherein said clustering of the data comprises a clustering into groups.

11. The method according to claim 10, wherein the data clustering into groups comprises the steps:

- Cross-spectra of the data are evaluated;
- Data are grouped together that show strong cross-spectra.

12. The method according to claim 11 comprising the step:

- A cross-spectra matrix is determined.

13. The method according to claim 12, wherein the cross-spectra matrix is permuted to obtain a strong block-diagonal structure.

14. The method according to claim 13, wherein a channel matrix is permuted according to the cross-spectra matrix.

15. The method according to claim 14, wherein blocks of the permuted clustered channel matrix are inverted, wherein the cross-spectra matrix is utilized to find said clusters that enable permutation of the channel matrix.

16. The method according to any of the preceding claims, wherein a bitloading for a multi-user scenario is calculated on a per-cluster or per-group basis, using the information obtained from said clustering.

17. The method according to any of the preceding claims used for crosstalk and/or interference reduction and/or cancellation.

18. The method according to any of the preceding claims used in a digital subscriber line (DSL, xDSL) environment.

19. The method according to any of the preceding claims used in a communication network, in particular is a central office (CO) or in a digital subscriber line access multiplexer (DSLAM).

20. A device for data processing, in particular for interference and/or crosstalk reduction and/or cancellation comprising a processor unit that is arranged such that the method according of any of the preceding claims is executable on said processor.

21. The device according to claim 20, wherein said device is a communication device, in particular a Central Office or a Digital Subscriber Line Access Multiplexer.

22. Communication system comprising the device according to any of claims 20 to 21.

# FIG 1

# FIG 2

Radio channel (r) Corrected Transmit power (b) and Deltasignal (g)
for SC 1 to 64 in dB

# FIG 3A

x: element with crosstalk value above threshold
o: diagonal element of the channel matrix

# FIG 3B

x: element with crosstalk value above threshold
o: diagonal element of the channel matrix

FIG 4

401

50 lines → Matrix size 50x50 → 50 lines

402

10 lines → 10x10 → 10 lines
10 lines → 10x10 → 10 lines
10 lines → 10x10 → 10 lines
10 lines → 10x10 → 10 lines
10 lines → 10x10 → 10 lines

## FIG 5

PC/TV — CPE — xDSL — CO or DSLAM — Network — Server

Upstream Traffic →

← Downstream Traffic

## FIG 6

CO

Loop plant model

CPE

$x_1(t)$ →

$y_2(t)$ ←

$h_{k,l}(t)$

→ $y_1(t)$

$x_2(t)$

$x_{2N-1}(t)$ →

$y_{2N}(t)$ ←

→ $y_{2N-1}(t)$

$x_{2N}(t)$

FIG 7A

Star-Quad

FIG 7B

Star-Quad

Ground Bundle

**European Patent Office**

**EUROPEAN SEARCH REPORT**

Application Number

EP 07 01 0646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CENDRILLON R ET AL: "Partial crosstalk precompensation in downstream VDSL" SIGNAL PROCESSING, ELSEVIER SCIENCE PUBLISHERS B.V. AMSTERDAM, NL, vol. 84, no. 11, November 2004 (2004-11), pages 2005-2019, XP004591296 ISSN: 0165-1684 | 1-12, 17-22 | INV. H04B3/32 H04L27/26 |
| Y | * paragraphs [0002] - [0004] * ----- | 13-16 | |
| X | CENDRILLON R ET AL: "Low complexity crosstalk cancellation through line selection in upstream vdsl" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 April 2003 (2003-04-06), pages IV692-IV695, XP010641254 ISBN: 0-7803-7663-3 | 1,17, 20-22 | |
| Y | * paragraphs [0004], [0005] * ----- | 13-16 | TECHNICAL FIELDS SEARCHED (IPC) H04B H04L H04M |
| X | CENDRILLON R ET AL: "Partial crosstalk cancellation for upstream VDSL" EURASIP Journal on Applied Signal Processing Hindawi USA, vol. 2004, no. 10, 15 August 2004 (2004-08-15), pages 1520-1535, XP002456935 ISSN: 1110-8657 | 1,17, 20-22 | |
| Y | * paragraph [0005] * ----- -/-- | 13-16 | |

The present search report has been drawn up for all claims

| Place of search | Date of completion of the search | Examiner |
|---|---|---|
| Munich | 21 January 2008 | Giglietto, Massimo |

**European Patent Office**

## EUROPEAN SEARCH REPORT

Application Number

EP 07 01 0646

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YINGTAO JIANG ET AL: "Substream Selection in Wireless MIMO Systems for Complexity Reduction" INFORMATION TECHNOLOGY: CODING AND COMPUTING, 2005. ITCC 2005. INTERNATIONAL CONFERENCE ON LAS VEGAS, NV, USA 04-06 APRIL 2005, PISCATAWAY, NJ, USA,IEEE, 4 April 2005 (2005-04-04), pages 729-733, XP010795402 ISBN: 0-7695-2315-3 * abstract * ----- | 13-15 | |
| Y | FOROUZAN A R ET AL: "Generalized iterative spectrum balancing and grouped vectoring for maximal throughput of digital subscriber lines" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 November 2005 (2005-11-28), pages 2359-2363, XP010879481 ISBN: 0-7803-9414-3 * paragraph [000B] * ----- | 16 | |
| | | | TECHNICAL FIELDS SEARCHED (IPC) |

The present search report has been drawn up for all claims

| Place of search | Date of completion of the search | Examiner |
|---|---|---|
| Munich | 21 January 2008 | Giglietto, Massimo |

EPO FORM 1503 03.82 (P04C01)

**EP 1 998 464 A1**

European Patent
Office

Application Number

EP 07 01 0646

---

**CLAIMS INCURRING FEES**

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

EP 1 998 464 A1

**European Patent Office**

**LACK OF UNITY OF INVENTION**
**SHEET B**

Application Number

EP 07 01 0646

The Search Division considers that the present European patent application does not comply with the requirements of unity of invention and relates to several inventions or groups of inventions, namely:

    1. claims: 1-9, 17-21

            method of data processing wherein (sub-inv 1: claims 2-4)
            the data comprise coefficients of a pre-coding matrix, or
            (sub-inv 2: claims 5-6) clustering comprise coordination or
            (sub-inv 3: claims 7-8) clustering comprises a provider
            and/or operator; or (sub-inv 4: claim 9) data represent a
            channel that is described as a MIMO system; or (sub-inv 5:
            claim 17) methods used for crosstalk and/or interference
            reduction and/or cancellation; or (sub-inv 6: claim 18)
            methods used in digital subscriber line environment; or
            (sub-inv 7) methods used in a communication network.
                            ---

    2. claims: 10-15

            methods of data processing wherein the clustering of data
            comprises a clustering into groups.
                            ---

    3. claim: 16

            methods of data processing comprising the step of
            calculating a bitloading for a multi-user scenario on a
            per-clustero or per-group basis.
                            ---

18